# EUROPEAN PATENT APPLICATION

(11) **EP 4 815 233 A1**
(43) Date of publication of application: **30.09.2026**
(21) Application number: 25751321.8
(22) Date of filing: 24.01.2025
(51) Int. Cl.: H02H 3/087, H02H 3/06, H02H 3/05

(54) **CURRENT BREAKING DEVICE AND CONTROL METHOD THEREFOR**

(30) Priority: 06.02.2024 CN 202410172735
(71) Applicant: NR Electric Co., Ltd, Nanjing, Jiangsu 211102 (CN); NR Engineering Co., Ltd., Nanjing, Jiangsu 211102 (CN); NR Electric Power Electronics Co., Ltd., Changzhou, Jiangsu 213000 (CN)
(72) Inventor: SHI, Wei, Nanjing, Jiangsu 211102 (CN); FANG, Taixun, Nanjing, Jiangsu 211102 (CN); LU, Yu, Nanjing, Jiangsu 211102 (CN); LV, Wei, Nanjing, Jiangsu 211102 (CN); WANG, Wenjie, Nanjing, Jiangsu 211102 (CN); CHEN, Yu, Nanjing, Jiangsu 211102 (CN); XU, Yuanzhen, Nanjing, Jiangsu 211102 (CN); SUN, Chao, Nanjing, Jiangsu 211102 (CN); ZHAO, Yingfeng, Nanjing, Jiangsu 211102 (CN)
(74) Representative: Becker Kurig & Partner Patentanwälte mbB
(86) International application number: PCT/CN2025/074532
(87) International publication number: WO 2025/167719

(57) **Abstract**

The present application provides a current breaking device and a control method therefor. The current breaking device comprises: a main branch, wherein the main branch comprises at least two current-conducting units connected in series, and each current-conducting unit comprises a first mechanical switch and a first nonlinear resistor which are connected in parallel; a transfer branch, wherein the transfer branch is connected in parallel to the main branch, and the transfer branch comprises an oscillating capacitor; an isolation branch, wherein the isolation branch is connected to the main branch in series, and the isolation branch comprises a second mechanical switch; and an oscillating inductor and a power electronics unit, connected in series in a parallel loop of the main branch and the transfer branch, wherein the oscillating inductor is connected in series within the main branch or within the transfer branch, and the power electronics unit is connected in series within the main branch or within the transfer branch.

## Description

### Technical Field

The present application relates to the technical field of power electronics, and in particular to a current breaking device and a control method therefor.

### Background

In direct current (DC) applications, since the fault current of DC power transmission and distribution systems rises rapidly, reliable and rapid fault isolation and recovery are the key to ensuring the safe and stable operation thereof. Existing DC circuit breakers include mechanical DC circuit breakers, hybrid DC circuit breakers, and all-solid-state DC circuit breakers.

The mechanical DC circuit breakers can be further divided into those adopting passive oscillation technology and active oscillation technology. Due to the use of large-capacitance capacitors, mechanical DC circuit breakers have drawbacks such as large equipment volume, long breaking times under small-current conditions, high risk of reignition of mechanical switches at current zero crossing, and prone to oscillating with the DC system during the breaking process, which poses potential risks to the normal and safe operation of the system and other equipment.

Hybrid DC circuit breakers, which integrate mechanical switches and power electronics technology, achieve controllable current breaking by means of power electronic devices and have the advantages of arc-free operation, fast reclosing and good system adaptability. However, both the technical performance during current breaking and the equipment cost-effectiveness are limited by fully-controlled power electronic devices, which is not conducive to their large-scale promotion and application in high-voltage DC power transmission systems.

The prior patent CN108475595A discloses a DC circuit breaker based on the LC active resonance principle, which can solve the problems of the prior art such as high risk of mechanical switch reignition, long small current breaking time, significant oscillation with the system, and high equipment cost. However, the DC circuit breaker has defects in closing/reclosing operations and requires additional discharge paths or requires mechanical switches to withstand large closing inrush currents.

The above information disclosed in the Background section is only for facilitating the understanding of the background of the present application and therefore may contain information that does not constitute prior art that is already known to a person of ordinary skill in the art.

### Summary

To solve at least one of the above problems, the present application provides a current breaking device and a control method therefor.

According to a first aspect of the present application, at least one embodiment of the present application provides a current breaking device, including a main branch including at least two current-conducting units connected in series, wherein each current-conducting unit includes a first mechanical switch and a first nonlinear resistor connected in parallel; a transfer branch being connected in parallel with the main branch and including an oscillating capacitor; an isolation branch being connected in series with the main branch and including a second mechanical switch; and an oscillating inductor and a power electronics unit being connected in series in a parallel loop of the main branch and the transfer branch, wherein the oscillating inductor is connected in series within the main branch or within the transfer branch, and the power electronics unit is connected in series within the main branch or within the transfer branch.

For example, in some embodiments of the present application, the device further includes a second nonlinear resistor connected in parallel with the oscillating capacitor, with a series branch of the oscillating capacitor and the oscillating inductor, with a series branch of the oscillating capacitor and the power electronics unit, or with the transfer branch.

For example, in some embodiments of the present application, the power electronics unit includes one power electronic module or at least two power electronic modules connected in series.

For example, in some embodiments of the present application, the power electronic module includes: a first power electronic switch, a second power electronic switch and a first voltage source, wherein an anode of the first power electronic switch is connected to a positive pole of the first voltage source, a cathode of the first power electronic switch is connected to an anode of the second power electronic switch and then is led out as an external connection terminal, and a cathode of the second power electronic switch is connected to a negative pole of the first voltage source and then is led out as an external connection terminal; the power electronic module includes: a third power electronic switch, a fourth power electronic switch, a fifth power electronic switch, a sixth power electronic switch and a second voltage source, wherein an anode of the third power electronic switch is connected to an anode of the fifth power electronic switch and a positive pole of the second voltage source, a cathode of the fourth power electronic switch is connected to a cathode of the sixth power electronic switch and a negative pole of the second voltage source, a cathode of the third power electronic switch is connected to an anode of the fourth power electronic switch and then is led out as an external connection terminal, and a cathode of the fifth power electronic switch is connected to an anode of the sixth power electronic switch and then is led out as an external connection terminal; or, the power electronic module includes: a seventh power electronic switch, an eighth power electronic switch, a third voltage source and a fourth voltage source, wherein an anode of the seventh power electronic switch is connected to a positive pole of the third voltage source, a cathode of the eighth power electronic switch is connected to a negative pole of the fourth voltage source, a cathode of the seventh power electronic switch is connected to an anode of the eighth power electronic switch and then is led out as an external connection terminal, and a negative pole of the third voltage source is connected to a positive pole of the fourth voltage source and then is led out as an external connection terminal.

For example, in some embodiments of the present application, each of the first power electronic switch, the second power electronic switch, the third power electronic switch, the fourth power electronic switch, the fifth power electronic switch, the sixth power electronic switch, the seventh power electronic switch and the eighth power electronic switch includes a single-level power semiconductor device, or at least two stages of power semiconductor devices connected in series or in parallel, wherein the power semiconductor devices include fully-controlled power semiconductor devices or half-controlled power semiconductor devices; each of the first voltage source, the second voltage source, the third voltage source and the fourth voltage source includes at least one of a pre-charged capacitor, an energy storage battery and an AC rectified power supply.

For example, in some embodiments of the present application, the fully-controlled power semiconductor devices include at least one of IGBTs, IEGTs, IGCTs, MOSFETs and GTOs; and the half-controlled power semiconductor devices include thyristors.

For example, in some embodiments of the present application, the first mechanical switch or the second mechanical switch includes one mechanical switch, or at least two mechanical switches connected in series or in parallel; the oscillating capacitor includes one capacitor, or at least two capacitors connected in series or in parallel; the oscillating inductor includes one inductor, or at least two inductors connected in series or in parallel; the first nonlinear resistor includes one nonlinear resistor, or at least two nonlinear resistors connected in series or in parallel.

According to a second aspect of the present application, at least one embodiment of the present application provides a method for controlling a current breaking device according to any one embodiment in the first aspect, including: a. when a fault occurs in a system, outputting an opening command to open the first mechanical switches of the main branch; b. when the first mechanical switches are opened to an insulating open position, triggering the power electronics unit to output a single-pulse or multi-pulse square wave voltage to excite the oscillating capacitor and the oscillating inductor to oscillate, so that the transfer branch generates an oscillating current equal in amplitude and opposite in direction to a fault current, and the oscillating current enables the first mechanical switches to be interrupted at current zero crossing; c. upon the interruption of the first mechanical switches at the current zero crossing, allowing the fault current to charge the oscillating capacitor of the transfer branch; and where a voltage across the oscillating capacitor is greater than an operating voltage of the first nonlinear resistor or the second nonlinear resistor, transferring the fault current to the first nonlinear resistor or the second nonlinear resistor, and dissipating the fault current to zero; d. opening the second mechanical switch of the isolation branch; e. closing each group of the first mechanical switches of the main branch group by group, so that the oscillating capacitor of the transfer branch discharges through the first nonlinear resistor of the main branch; f. outputting a reclosing command to close the second mechanical switch of the isolation branch; and g. when the current breaking device recloses onto a faulty system, re-executing step a.

For example, in some embodiments of the present application, the method further includes: when no fault occurs in the system, enabling the first mechanical switches of the main branch to be in a closed state, the second mechanical switch of the isolation branch to be in a closed state, and the power electronic module of the transfer branch to be in a blocked state or a disconnected state.

For example, in some embodiments of the present application, the opening the second mechanical switch of the isolation branch includes: executing step d during a process of executing step a, step b or step c.

According to the current breaking device and the control method therefor provided in the present application, when the current breaking device performs an opening operation, by controlling the operating state of internal components in the main branch and the transfer branch, the transfer branch generates an oscillating current equal in amplitude and opposite in direction to the fault current, so as to realize reliable breaking of the main branch. The present application overcomes the problems of high reignition risk of mechanical switches, long breaking time of small current, significant interaction with the system and high equipment cost, and is conducive to large-scale popularization and application in AC and DC power transmission and distribution systems. By closing multiple mechanical switches of the main branch sequentially, the energy of the oscillating capacitor accumulated in the previous opening operation is released, which effectively reduces the closing/reclosing inrush current and prolongs the service life of the mechanical switches.

It should be understood that the above general description and the following detailed description are merely exemplary and shall not limit the present application.

### Brief Description of the Drawings

The above and other objectives, features and advantages of the present application will become more apparent from the following detailed description of exemplary embodiments with reference to the accompanying drawings. The accompanying drawings described below merely illustrate some embodiments of the present application, and are not intended to limit the present application.
FIG. 1 shows Embodiment 1 of an exemplary current breaking device.
FIG. 2 shows Embodiment 2 of an exemplary current breaking device.
FIG. 3 shows Embodiment 3 of an exemplary current breaking device.
FIG. 4 shows Embodiment 4 of an exemplary current breaking device.
FIG. 5 shows Embodiment 5 of an exemplary current breaking device.
FIG. 6A shows Embodiment 1 of an exemplary power electronic module.
FIG. 6B shows Embodiment 2 of an exemplary power electronic module.
FIG. 6C shows Embodiment 3 of an exemplary power electronic module.
FIG. 7 is a flowchart illustrating an exemplary method for controlling a current breaking device.
FIG. 8A shows Embodiment 1 of the circuit structure of an exemplary passive power electronic module.
FIG. 8B shows Embodiment 2 of the circuit structure of an exemplary passive power electronic module.
FIG. 8C shows Embodiment 3 of the circuit structure of an exemplary passive power electronic module.
FIG. 8D shows Embodiment 4 of the circuit structure of an exemplary passive power electronic module.
FIG. 9A shows Embodiment 1 of extended connection diagram of an exemplary current breaking device.
FIG. 9B shows Embodiment 2 of extended connection diagram of an exemplary current breaking device.
FIG. 9C shows Embodiment 3 of extended connection diagram of an exemplary current breaking device.

### Detailed Description of Embodiments

Example embodiments will now be described more fully with reference to the accompanying drawings. However, the example embodiments may be embodied in various forms and shall not be construed as being limited to the embodiments set forth herein; rather, these embodiments are provided so that the present application will be thorough and complete, and will fully convey the concept of the exemplary embodiments to those skilled in the art. The same reference numerals in the drawings denote the same or similar parts, and thus repeated descriptions thereof will be omitted.

The described features, structures, or characteristics may be combined in any suitable manner in one or more embodiments. In the following description, numerous specific details are provided to afford a thorough understanding of the embodiments of the present disclosure. However, those skilled in the art will realize that the technical solutions of the present disclosure may be practiced without one or more of these specific details, or other manners, components, materials, devices and the like may be adopted. In such cases, well-known structures, methods, devices, implementations, materials or operations will not be shown or described in detail.

The flowcharts shown in the accompanying drawings are merely illustrative, and are not required to include all contents, operations or steps, nor are they necessarily executed in the described order. For example, some operations or steps may be decomposed, and some operations or steps may be combined or partially combined, so that the actual execution order may be changed according to practical situations.

The terms "first", "second" and the like in the specification, claims and accompanying drawings of the present application are used to distinguish different objects, rather than to describe a specific sequence. In addition, the terms "comprising", "including", "having" and any variations thereof are intended to cover non-exclusive inclusion. For instance, a process, method, system, product or device including a series of steps or units is not limited to the listed steps or units, but may optionally further include unlisted steps or units, or optionally further include other steps or units inherent to such process, method, product or device.

It should be understood by those skilled in the art that the accompanying drawings are merely schematic diagrams of the example embodiments, and the modules or flows in the drawings are not necessarily essential for implementing the present application, and thus shall not be used to limit the scope of the present application.

The present application provides a current breaking device. The current breaking device includes a main branch, a transfer branch and an isolation branch. The main branch is connected in parallel with the transfer branch, and the isolation branch is connected in series with the main branch. The main branch includes at least two current-conducting units connected in series. Each current-conducting unit includes a first mechanical switch and a first nonlinear resistor connected in parallel. The transfer branch includes an oscillating capacitor. The isolation branch includes a second mechanical switch. An oscillating inductor and a power electronics unit are connected in series in a parallel loop formed by the main branch and the transfer branch. The oscillating inductor is connected in series within the main branch or within the transfer branch, and the power electronics unit is connected in series within the main branch or within the transfer branch.

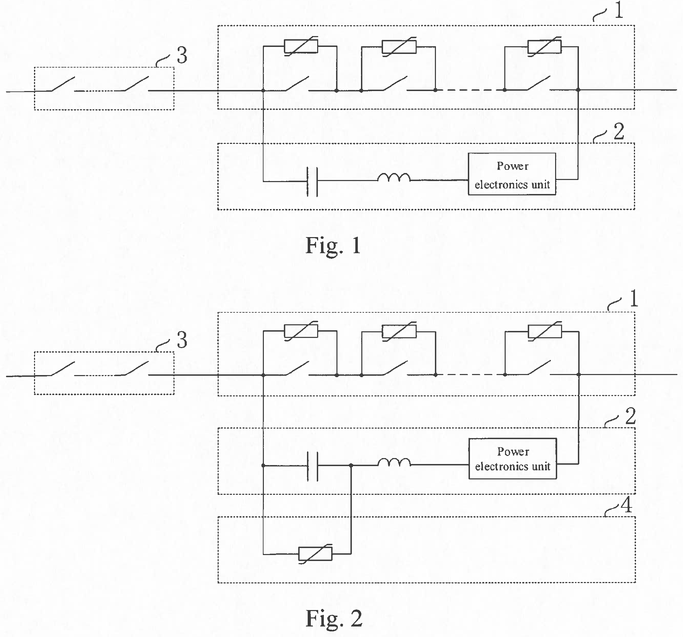

FIG. 1 shows Embodiment 1 of an exemplary current breaking device.

As shown in FIG. 1, the current breaking device includes a main branch (1), a transfer branch (2) and an isolation branch (3). The main branch (1) is connected in parallel with the transfer branch (2), and the isolation branch (3) is connected in series with the main branch (1). The main branch (1) includes at least two current-conducting units connected in series. Each current-conducting unit includes a first mechanical switch and a first nonlinear resistor which are connected in parallel. The transfer branch (2) includes an oscillating capacitor, an oscillating inductor and a power electronics unit which are connected in series. The isolation branch (3) includes at least one second mechanical switch.

FIG. 2 shows Embodiment 2 of an exemplary current breaking device.

As shown in FIG. 2, the current breaking device includes a main branch (1), a transfer branch (2), an isolation branch (3) and a second nonlinear resistor (4). The main branch (1) is connected in parallel with the transfer branch (2), and the isolation branch (3) is connected in series with the main branch (1). The main branch (1) includes at least two current-conducting units connected in series. Each current-conducting unit includes a first mechanical switch and a first nonlinear resistor which are connected in parallel. The transfer branch (2) includes an oscillating capacitor, an oscillating inductor and a power electronics unit which are connected in series. The isolation branch (3) includes at least one second mechanical switch. The second nonlinear resistor (4) is connected in parallel with the oscillating capacitor.

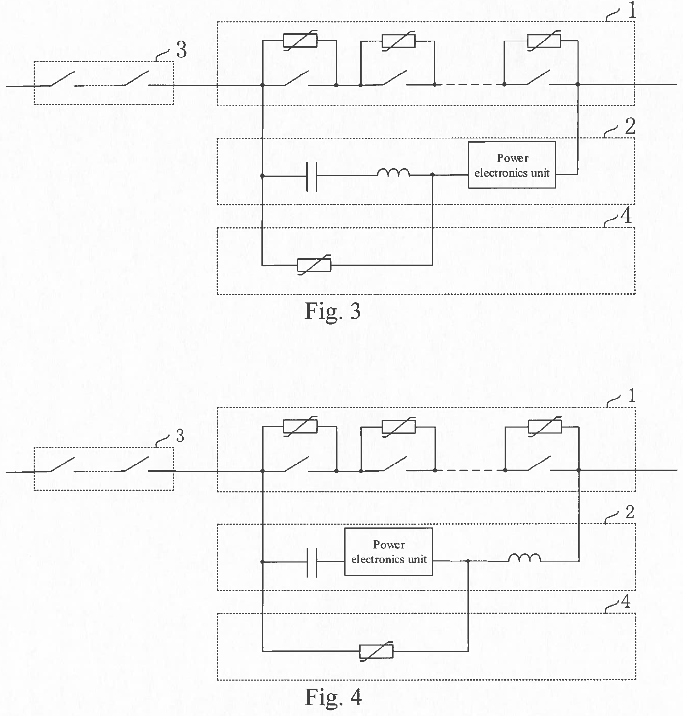

FIG. 3 shows Embodiment 3 of an exemplary current breaking device.

As shown in FIG. 3, the current breaking device includes a main branch (1), a transfer branch (2), an isolation branch (3) and a second nonlinear resistor (4). The main branch (1) is connected in parallel with the transfer branch (2), and the isolation branch (3) is connected in series with the main branch (1). The main branch (1) includes at least two current-conducting units connected in series. Each current-conducting unit includes a first mechanical switch and a first nonlinear resistor which are connected in parallel. The transfer branch (2) includes an oscillating capacitor, an oscillating inductor and a power electronics unit which are connected in series. The isolation branch (3) includes at least one second mechanical switch. The second nonlinear resistor (4) is connected in parallel with a series branch of the oscillating capacitor and the oscillating inductor.

FIG. 4 shows Embodiment 4 of an exemplary current breaking device.

As shown in FIG. 4, the current breaking device includes a main branch (1), a transfer branch (2), an isolation branch (3) and a second nonlinear resistor (4). The main branch (1) is connected in parallel with the transfer branch (2), and the isolation branch (3) is connected in series with the main branch (1). The main branch (1) includes at least two current-conducting units connected in series. Each current-conducting unit includes a first mechanical switch and a first nonlinear resistor which are connected in parallel. The transfer branch (2) includes an oscillating capacitor, an oscillating inductor and a power electronics unit which are connected in series. The isolation branch (3) includes at least one second mechanical switch. The second nonlinear resistor (4) is connected in parallel with a series branch of the oscillating capacitor and the power electronics unit.

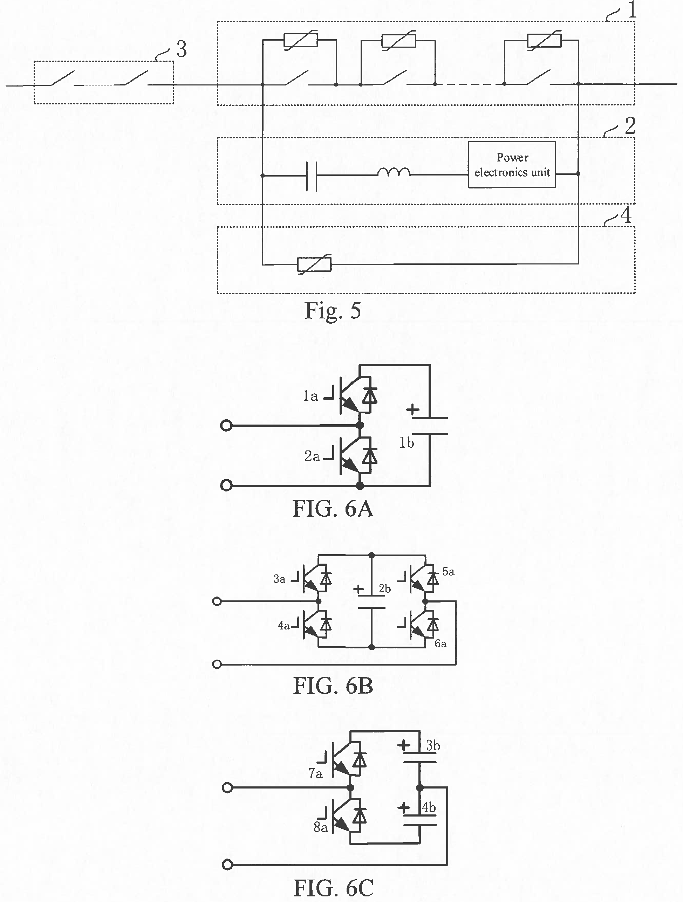

FIG. 5 shows Embodiment 5 of an exemplary current breaking device.

As shown in FIG. 5, the current breaking device includes a main branch (1), a transfer branch (2), an isolation branch (3) and a second nonlinear resistor (4). The main branch (1) is connected in parallel with the transfer branch (2), and the isolation branch (3) is connected in series with the main branch (1). The main branch (1) includes at least two current-conducting units connected in series. Each current-conducting unit includes a first mechanical switch and a first nonlinear resistor which are connected in parallel. The transfer branch (2) includes an oscillating capacitor, an oscillating inductor and a power electronics unit which are connected in series. The isolation branch (3) includes at least one second mechanical switch. The second nonlinear resistor (4) is connected in parallel with the transfer branch (2).

In some embodiments, the power electronics unit includes one power electronic module or at least two power electronic modules connected in series.

FIG. 6A shows Embodiment 1 of an exemplary power electronic module.

As shown in FIG. 6A, the power electronic module includes a first power electronic switch 1a, a second power electronic switch 2a and a first voltage source 1b. An anode of the first power electronic switch 1a is connected to a positive pole of the first voltage source 1b; a cathode of the first power electronic switch 1a is connected to an anode of the second power electronic switch 2a and then is led out as an external connection terminal; a cathode of the second power electronic switch 2a is connected to a negative pole of the first voltage source 1b and then is led out as an external connection terminal.

FIG. 6B shows Embodiment 2 of an exemplary power electronic module.

As shown in FIG. 6B, the power electronic module includes a third power electronic switch 3a, a fourth power electronic switch 4a, a fifth power electronic switch 5a, a sixth power electronic switch 6a and a second voltage source 2b. An anode of the third power electronic switch 3a is respectively connected to an anode of the fifth power electronic switch 5a and a positive pole of the second voltage source 2b; a cathode of the fourth power electronic switch 4a is respectively connected to a cathode of the sixth power electronic switch 6a and a negative pole of the second voltage source 2b; a cathode of the third power electronic switch 3a is connected to an anode of the fourth power electronic switch 4a and then is led out as an external connection terminal; a cathode of the fifth power electronic switch 5a is connected to an anode of the sixth power electronic switch 6a and then is led out as an external connection terminal.

FIG. 6C shows Embodiment 3 of an exemplary power electronic module.

As shown in FIG. 6C, the power electronic module includes a seventh power electronic switch 7a, an eighth power electronic switch 8a, a third voltage source 3b and a fourth voltage source 4b; an anode of the seventh power electronic switch 7a is connected to a positive pole of the third voltage source 3b; a cathode of the eighth power electronic switch 8a is connected to a negative pole of the fourth voltage source 4b; a cathode of the seventh power electronic switch 7a is connected to an anode of the eighth power electronic switch 8a and then is led out as an external connection terminal; a negative pole of the third voltage source 3b is connected to a positive pole of the fourth voltage source 4b and then is led out as an external connection terminal.

In some embodiments, each of the first power electronic switch 1a, the second power electronic switch 2a, the third power electronic switch 3a, the fourth power electronic switch 4a, the fifth power electronic switch 5a, the sixth power electronic switch 6a, the seventh power electronic switch 7a and the eighth power electronic switch 8a includes a single-level power semiconductor device, or at least two stages of power semiconductor devices connected in series or in parallel. The power semiconductor devices include fully-controlled power semiconductor devices or half-controlled power semiconductor devices. The fully-controlled power semiconductor devices include at least one of IGBTs, IEGTs, IGCTs, MOSFETs and GTOs. The half-controlled power semiconductor devices include thyristors.

Each of the first voltage source 1b, the second voltage source 2b, the third voltage source 3b and the fourth voltage source 4b includes at least one of a pre-charged capacitor, an energy storage battery and an AC rectified power supply. To protect the voltage source and avoid overvoltage damage during current breaking, overvoltage protection measures can be connected in parallel at two ends thereof, such as an arrester or a chopper circuit.

The first mechanical switch or the second mechanical switch includes one mechanical switch, or at least two mechanical switches connected in series or in parallel. It is generally a high-speed fast switch, which may adopt a mechanical switch based on the principles of electromagnetic repulsion, permanent magnet, or explosion drive. When multiple fast switches are connected in series, an RC circuit is usually connected in parallel beside each fast switch to improve voltage sharing performance.

The oscillating capacitor includes one capacitor, or at least two capacitors connected in series or in parallel.

The oscillating inductor includes one inductor, or at least two inductors connected in series or in parallel.

The first nonlinear resistor includes one nonlinear resistor, or at least two nonlinear resistors connected in series or in parallel. The nonlinear resistor is generally a zinc oxide arrester.

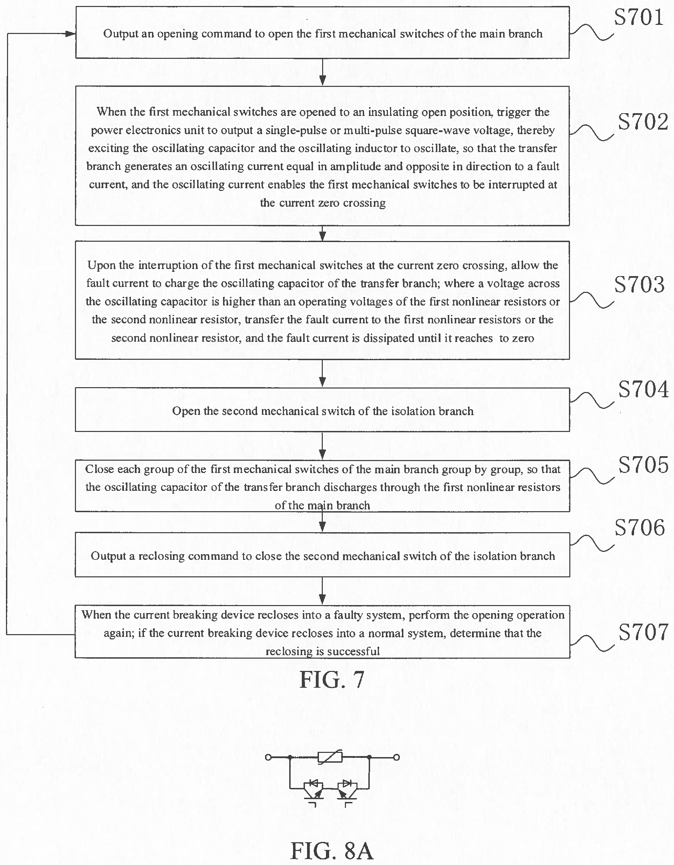

FIG. 7 is a flowchart illustrating an exemplary method for controlling a current breaking device.

When no fault occurs in the system, the current breaking device is initially in a closed position. Current flows through the main branch (1) and the isolation branch (3). The first mechanical switches of the main branch (1) are in a closed state, the second mechanical switch of the isolation branch (3) is in a closed state, and the power electronic module of the transfer branch (2) is in a locked state or a disconnected state. When a fault occurs in the system, the opening and reclosing operations are performed as follows.

In step S701, an opening command is output to open the first mechanical switches of the main branch.

Upon receiving the opening command, the current breaking device opens the first mechanical switches of the main branch.

In step S702, when the first mechanical switches are opened to an insulating open position, the power electronics unit is triggered to output a single-pulse or multi-pulse square-wave voltage, thereby exciting the oscillating capacitor and the oscillating inductor to oscillate, so that the transfer branch generates an oscillating current equal in amplitude and opposite in direction to a fault current, and the oscillating current enables the first mechanical switches to be interrupted at the current zero crossing.

In some embodiments, when the current breaking device is applied to a load switch, the load current to be broken is generally small, and the power electronics unit may be designed for single-pulse output. The pulse frequency is set close to the resonant frequency of the oscillating capacitor and the oscillating inductor, and the peak value of the generated single-pulse current is greater than the amplitude of the load current. When the current breaking device is applied to a circuit breaker, the fault current to be broken is generally large, and the power electronics unit may be designed for multi-pulse output. The pulse frequency is set close to the resonant frequency of the oscillating capacitor and the oscillating inductor, and the continuously rising current peak generated by multiple oscillations is greater than the amplitude of the fault current.

In step S703, upon the interruption of the first mechanical switches at the current zero crossing, the fault current charges the oscillating capacitor of the transfer branch. Where a voltage across the oscillating capacitor is higher than an operating voltage of the first nonlinear resistor or the second nonlinear resistor, the fault current is transferred to the first nonlinear resistor or the second nonlinear resistor, and the fault current is dissipated until it reaches to zero.

In step S704, the second mechanical switch of the isolation branch is opened.

In some embodiments, the step of opening the second mechanical switch of the isolation branch may be executed during a process of executing step S701, S702 or S703.

In step S705, each group of the first mechanical switches of the main branch are closed group by group, so that the oscillating capacitor of the transfer branch discharges through the first nonlinear resistors of the main branch.

In step S706, a reclosing command is output to close the second mechanical switch of the isolation branch.

When the current breaking device recloses into a faulty system, the opening operation is performed again and step S701 is re-executed; if the current breaking device recloses into a normal system, the reclosing is successful.

The present application provides a current breaking device and a control method therefor. When the current breaking device performs an opening operation, by controlling the operating state of internal components in the main branch and the transfer branch, the transfer branch generates an oscillating current equal in amplitude and opposite in direction to the fault current, so as to realize reliable breaking of the main branch. The present application overcomes the problems of high reignition risk of mechanical switches, long breaking time of small current, significant interaction with the system and high equipment cost, and is conducive to large-scale popularization and application in AC and DC power transmission and distribution systems. By closing multiple mechanical switches of the main branch sequentially, the energy of the oscillating capacitor accumulated in the previous opening operation is released, which effectively reduces the closing/reclosing inrush current and prolongs the service life of the mechanical switches.

In some embodiments, the oscillating inductor in the transfer branch of the present application may be arranged in the main branch. One oscillating inductor may be directly connected in series in the main branch, or one oscillating inductor may be connected in series in each current-conducting unit. The oscillating inductor arranged in the main branch may be a linear inductor or a saturated inductor.

In some embodiments, the power electronics unit in the transfer branch of the present application may also be arranged in the main branch. A plurality of power electronic modules may be directly connected in series in the main branch, or a plurality of power electronic modules may be connected in series in each current-conducting unit. In this case, in addition to the active power electronic module topology shown in FIG. 6, the power electronic module may also employ the passive power electronic module topologies shown in FIGS. 8A-8D.

FIG. 8A shows Embodiment 1 of the circuit structure of an exemplary passive power electronic module, which includes two power electronic switches and a nonlinear resistor, where the nonlinear resistor is connected in parallel with the two power electronic switches connected end to end in series.

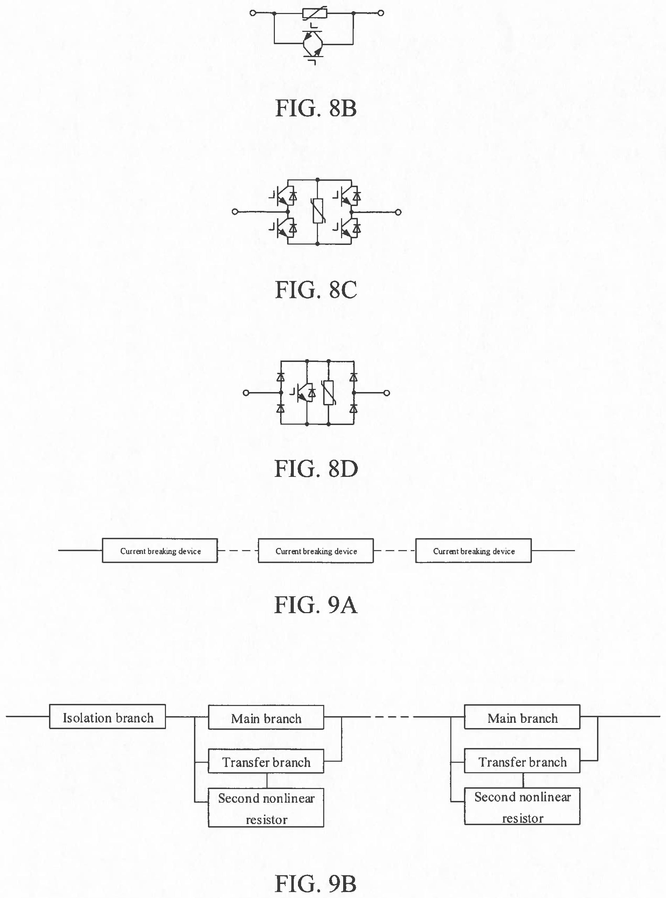

FIG. 8B shows Embodiment 2 of the circuit structure of an exemplary passive power electronic module, which includes two power electronic switches and a nonlinear resistor, wherein the nonlinear resistor is connected in parallel with the two power electronic switches connected end to end in parallel.

FIG. 8C shows Embodiment 3 of the circuit structure of an exemplary passive power electronic module, which includes four power electronic switches and a nonlinear resistor, where the four power electronic switches form a full-bridge circuit, and the nonlinear resistor is connected in parallel with the DC side of the full-bridge circuit.

FIG. 8D shows Embodiment 4 of the circuit structure of an exemplary passive power electronic module, which includes four diodes, a power electronic switch and a nonlinear resistor, where the four diodes form a diode full-bridge circuit; the power electronic switch is connected in parallel with the DC side of the diode full-bridge circuit, and the nonlinear resistor is connected in parallel with the DC side or the AC side of the full-bridge circuit.

In the present application, a plurality of current breaking devices can be flexibly expanded in a modular series-connected manner, as shown in FIG. 9A, so as to meet the application requirements of high-voltage systems or the compact structural design requirements of engineering applications.

The parallel section of the main branch and the transfer branch in the present application may also be flexibly expanded in a modular series-connected manner, as shown in FIG. 9B, so as to meet the application requirements of high-voltage systems or the compact structural design requirements of engineering applications.

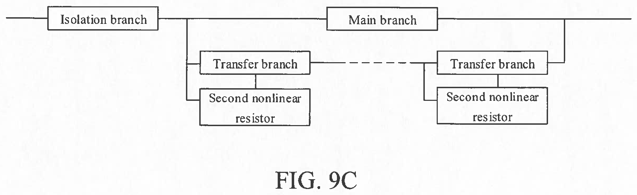

The transfer branch in the present application may also be flexibly expanded in a modular series-connected manner, as shown in FIG. 9C, so as to meet the application requirements of high-voltage systems or the compact structural design requirements of engineering applications.

It should be clearly understood that the present application describes the formation and use of specific examples, but the present application is not limited to any details of these examples. On the contrary, based on the teachings of the content disclosed herein, the principles of the present application may be applied to many other embodiments.

In addition, it should be noted that the accompanying drawings described above are merely schematic illustrations of the processes included by the methods according to the exemplary embodiments of the present application, and should not be construed as limitations. It also should be appreciated that the processes shown in the accompanying drawings do not indicate or limit the chronological order of these processes. In addition, it is also to be understood that these processes may be executed synchronously or asynchronously in a plurality of modules.

The exemplary embodiments of the present application have been illustrated and described in detail above. It should be appreciated that the present application is not limited to the detailed structures, arrangements or implementations described herein; on the contrary, the present application is intended to cover various modifications and equivalent arrangements falling within the spirit and scope of the appended claims.

## Claims

1. A current breaking device, comprising:
a main branch comprising at least two current-conducting units connected in series, wherein each current-conducting unit comprises a first mechanical switch and a first nonlinear resistor connected in parallel;
a transfer branch being connected in parallel with the main branch and comprising an oscillating capacitor;
an isolation branch being connected in series with the main branch and comprising a second mechanical switch; and
an oscillating inductor and a power electronics unit being connected in series in a parallel loop of the main branch and the transfer branch, wherein the oscillating inductor is connected in series within the main branch or within the transfer branch, and the power electronics unit is connected in series within the main branch or within the transfer branch.

2. The current breaking device according to claim 1, further comprising:
a second nonlinear resistor connected in parallel with the oscillating capacitor, with a series branch of the oscillating capacitor and the oscillating inductor, with a series branch of the oscillating capacitor and the power electronics unit, or with the transfer branch.

3. The current breaking device according to claim 1, wherein the power electronics unit comprises one power electronic module or at least two power electronic modules connected in series.

4. The current breaking device according to claim 3, wherein the power electronic module comprises:
a first power electronic switch, a second power electronic switch and a first voltage source, wherein an anode of the first power electronic switch is connected to a positive pole of the first voltage source, a cathode of the first power electronic switch is connected to an anode of the second power electronic switch and then is led out as an external connection terminal, and a cathode of the second power electronic switch is connected to a negative pole of the first voltage source and then is led out as an external connection terminal;
a third power electronic switch, a fourth power electronic switch, a fifth power electronic switch, a sixth power electronic switch and a second voltage source, wherein an anode of the third power electronic switch is connected to an anode of the fifth power electronic switch and a positive pole of the second voltage source, a cathode of the fourth power electronic switch is connected to a cathode of the sixth power electronic switch and a negative pole of the second voltage source, a cathode of the third power electronic switch is connected to an anode of the fourth power electronic switch and then is led out as an external connection terminal, and a cathode of the fifth power electronic switch is connected to an anode of the sixth power electronic switch and then is led out as an external connection terminal; or
a seventh power electronic switch, an eighth power electronic switch, a third voltage source and a fourth voltage source, wherein an anode of the seventh power electronic switch is connected to a positive pole of the third voltage source, a cathode of the eighth power electronic switch is connected to a negative pole of the fourth voltage source, a cathode of the seventh power electronic switch is connected to an anode of the eighth power electronic switch and then is led out as an external connection terminal, and a negative pole of the third voltage source is connected to a positive pole of the fourth voltage source and then is led out as an external connection terminal.

5. The current breaking device according to claim 4, wherein
each of the first power electronic switch, the second power electronic switch, the third power electronic switch, the fourth power electronic switch, the fifth power electronic switch, the sixth power electronic switch, the seventh power electronic switch and the eighth power electronic switch comprises a single-level power semiconductor device, or at least two stages of power semiconductor devices connected in series or in parallel, wherein
the power semiconductor devices comprise fully-controlled power semiconductor devices or half-controlled power semiconductor devices; and
each of the first voltage source, the second voltage source, the third voltage source and the fourth voltage source comprises at least one of a pre-charged capacitor, an energy storage battery and an AC rectified power supply.

6. The current breaking device according to claim 5, wherein
the fully-controlled power semiconductor devices comprise at least one of IGBTs, IEGTs, IGCTs, MOSFETs and GTOs;
the half-controlled power semiconductor devices comprise thyristors.

7. The current breaking device according to claim 1, wherein
the first mechanical switch or the second mechanical switch comprises one mechanical switch, or at least two mechanical switches connected in series or in parallel;
the oscillating capacitor comprises one capacitor, or at least two capacitors connected in series or in parallel;
the oscillating inductor comprises one inductor, or at least two inductors connected in series or in parallel;
the first nonlinear resistor comprises one nonlinear resistor, or at least two nonlinear resistors connected in series or in parallel.

8. A method for controlling the current breaking device according to any one of claims 1 to 7, the method comprising:
a. when a fault occurs in a system, outputting an opening command to open the first mechanical switches of the main branch;
b. when the first mechanical switches are opened to an insulating open position, triggering the power electronics unit to output a single-pulse or multi-pulse square wave voltage to excite the oscillating capacitor and the oscillating inductor to oscillate, so that the transfer branch generates an oscillating current equal in amplitude and opposite in direction to a fault current, and the oscillating current enables the first mechanical switches to be interrupted at current zero crossing;
c. upon the interruption of the first mechanical switches at the current zero crossing, allowing the fault current to charge the oscillating capacitor of the transfer branch; and where a voltage across the oscillating capacitor is greater than an operating voltage of the first nonlinear resistor or the second nonlinear resistor, transferring the fault current to the first nonlinear resistor or the second nonlinear resistor, and dissipating the fault current to zero;
d. opening the second mechanical switch of the isolation branch;
e. closing each group of the first mechanical switches of the main branch group by group, so that the oscillating capacitor of the transfer branch discharges through the first nonlinear resistors of the main branch;
f. outputting a reclosing command to close the second mechanical switch of the isolation branch; and
g. when the current breaking device recloses onto a faulty system, re-executing step a.

9. The method according to claim 8, further comprising:
when no fault occurs in the system, enabling the first mechanical switches of the main branch to be in a closed state, the second mechanical switch of the isolation branch to be in a closed state, and the power electronic module of the transfer branch to be in a blocked state or a disconnected state.

10. The method according to claim 8, wherein the opening the second mechanical switch of the isolation branch comprises:
executing step d during a process of executing step a, step b or step c.
